## Europäisches Patentamt
## European Patent Office
## Office européen des brevets

(19)

(11) Veröffentlichungsnummer: **0 147 782**
**B1**

(12) **EUROPÄISCHE PATENTSCHRIFT**

(45) Veröffentlichungstag der Patentschrift:
**29.03.89**

(51) Int. Cl.⁴: **B 60 S 1/34**

(21) Anmeldenummer: **84115789.4**

(22) Anmeldetag: **19.12.84**

(54) Scheibenwischeranlage, insbesondere steuerbare Einarm-Scheibenwischeranlage für Kraftfahrzeuge.

(30) Priorität: **04.01.84 DE 3400148**

(43) Veröffentlichungstag der Anmeldung:
**10.07.85 Patentblatt 85/28**

(45) Bekanntmachung des Hinweises auf die Patenterteilung:
**29.03.89 Patentblatt 89/13**

(84) Benannte Vertragsstaaten:
**FR GB IT SE**

(56) Entgegenhaltungen:
**DE-A-3 127 018**
**DE-A-3 220 501**
**US-A-2 494 408**

(73) Patentinhaber: **BAYERISCHE MOTOREN WERKE Aktiengesellschaft, Postfach 40 02 40 Petuelring 130 - AJ- 36, D-8000 München 40 (DE)**

(72) Erfinder: **Blatner, Eduard, Samfeldweg 12, D-8904 Friedberg (DE)**
Erfinder: **Ruchel, Günther, Dipl.- Ing., Opitzstrasse 18, D-2820 Bremen 70 (DE)**

(74) Vertreter: **Dexheimer, Rolf, Bayerische Motoren Werke Aktiengesellschaft Postfach 40 02 40 Petuelring 130 - AJ- 31, D-8000 München 40 (DE)**

LIBER, STOCKHOLM 1989

## Beschreibung

Die Erfindung betrifft eine Scheibenwischeranlage, insbesondere steuerbare Einarm-Scheibenwischeranlage für Kraftfahrzeuge, mit den im Oberbegriff des Hauptanspruchs angegebenen Merkmalen.

Eine derartige Scheibenwischeranlage ist bereits aus der DE-A-3 127 018 bekannt, die einen schwenkbaren Wischerarm aufweist, der zwei beidseitig druckbelastbare, in Längsrichtung verschiebbare Kolben aufnimmt. Mit jedem Kolben ist eine Steuerstange verbunden, die parallel angeordnet und jeweils am äußeren Ende mit einem Wischerblatt gelenkig verbunden sind. Im Wischerbetrieb wird das Wischerblatt durch entsprechende Druckbelastung der Kolben in Längsrichtung des Wischerarmes derart verstellt und verschwenkt, daß auch die oberen Eckbereich der Frontscheibe erreicht werden. Besonders nachteilig ist die aufwendige Gestaltung der Scheibenwischeranlage, die zwei Pumpeneinheiten erfordert, um ein Ein- und Ausfahren des Wischerarmes und eine Winkelverstellung des Wischerblattes zu erreichen. Im Winterbetrieb kann die Versorgung der Kolben mit Druckmittel aufgrund der kleinen Kanäle und der Viskosität des Druckmittels Schwierigkeiten bereiten, so daß die ordnungsgemäße Funktion der Anlage beeinträchtigt sein kann.

In der DE-A-3 220 501 ist eine Scheibenwischeranlage angegeben, die zum Freiwischen der Windschutzscheibe ein mit dem Wischerarm fest verbundenes Wischerblatt und ein neben dem Wischerblatt in Längsrichtung verstellbares Zusatzwischerblatt aufweist. Beim Verschwenken des Wischerarmes wird das Zusatzwischerblatt zum Freiwischen der Eckbereiche über das Wischerblatt hinaus in die Eckbereiche der Windschutzscheibe verlagert. Die Verstellung des Zusatzwischerblattes erfolgt über einen drucksteifen Seilzug, der einerseits mit dem Zusatzwischerblatt verbunden ist und andererseits, durch eine Zugfeder belastet, an einer von einem Wischermotor drehbaren Kurvenscheibe anliegt. Durch die Vorspannung der Zugfeder, die ein Abheben des Seiles von der Kurvenscheiben bei allen Betriebszuständen verhindern soll, sowie durch die Abstützung des Seiles in der Seilführung werden Reibungskräfte verursacht, die zu einem hohen Leistungsbedarf des Antriebs führen. Die Führung des Seiles weist starke Krümmungen im Bereich der Schwenkachse des Schwenkarmes und in der Nähe des Zusatzwischerblattes auf, die wechselnde Biegebeanspruchungen im Seil hervorrufen und dadurch die Haltbarkeit des Seiles wesentlich herabsetzen. Ein weiterer Nachteil ist, daß durch die seitliche Anordnung das Zusatzwischerblatt nicht ganz aus dem Sichtfeld bis zur Scheibenunterkante wegschwenkbar ist und auch in Ruhelage störend im Gesichtsfeld verbleibt.

Der Erfindung liegt die Aufgabe zugrunde, eine Scheibenwischeranlage nach dem Oberbegriff des Hauptanspruchs mit einem Scheibenwischer anzugeben, der durch Verlängerung des Wischerarmes und durch Schwenken des Wischerblattes das Sichtfeld der Frontscheibe möglichst großflächig zumindest von Regenwasser befreien kann. Außerdem soll die Scheibenwischeranlage zuverlässig in der Funktion sein und einen verhältnismäßig geringen Konstruktions- und Wartungsaufwand erfordern.

Diese Aufgabe ist durch die im Kennzeichen des Hauptanspruchs angegebenen Merkmale gelöst. Besonders vorteilhaft ist dabei der einfache mechanische Aufbau der Scheibenwischeranlage. Das Seil ist mit einem Ende in einem einfachen Bauteil, wie es das Führungsrohr darstellt, zwischen zwei ohne großen Aufwand zu bildenden Anschlägen verlagerbar, wobei die Verstellung des Wischerarmes zwangsweise beim Anliegen des Seiles an einem Anschlag ohne einen eigenen Antrieb bewirkt wird.

Zweckmäßige Ausgestaltungen der Erfindung sind Gegenstand von Unteransprüchen.

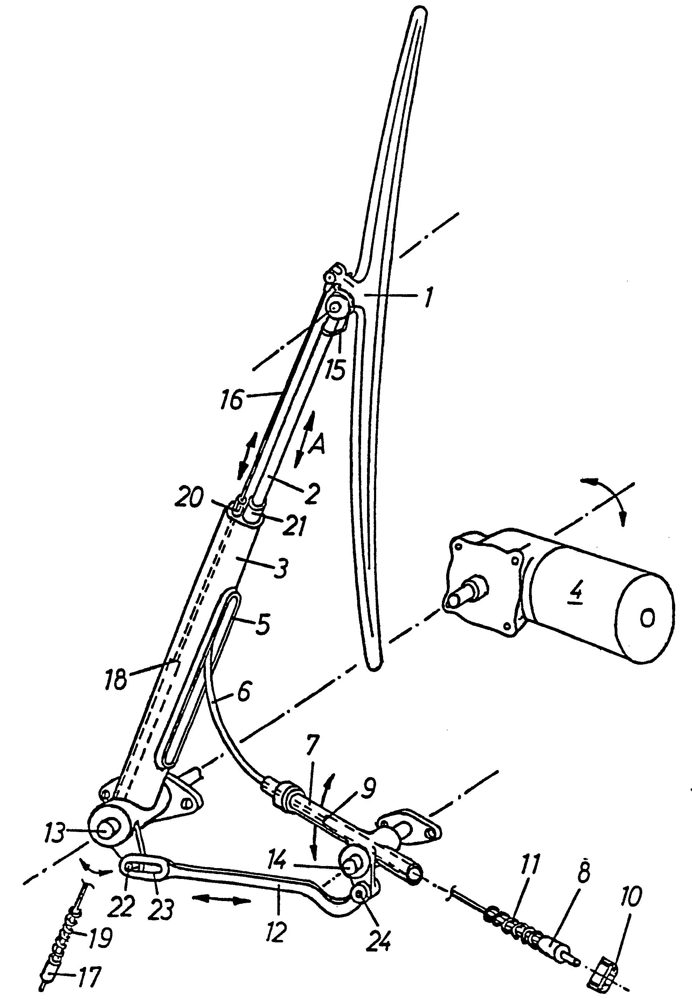

Ein Ausführungsbeispiel der Erfindung wird anhand der einzigen Zeichnung näher erläutert. Diese zeigt eine perspektivische Ansicht der Scheibenwischeranlage mit Detaildarstellungen in Explosionsform.

In der Zeichnung ist ein Scheibenwischer dargestellt, mit einem Wischerblatt 1 und einem Wischerarm, der aus einem Innen 2 - und einem Außenprofil 3 besteht. An der Außenseite des Innenprofils ist das Wischerblatt 1 in einem gewissen, von Anschlägen begrenzten Bereich schwenkbar angeordnet. Das Innenprofil 2 ist in dem vom Antriebsmotor 4 über Antriebsmittel in eine Schwenkbewegung versetzbaren Außenprofil 3 teleskopartig in Richtung des Doppelpfeiles A verschiebbar gelagert. An einer Wischerarmseite ist am Außenprofil 3 und am Innenprofil 2 je ein Langloch 5 ausgebildet. Beide Langlöcher 5, überdecken sich während des Wischerbetriebes ganz oder teilweise, je nach Stellung des Innenprofils 2 zu dem Außenprofil 3. Durch den Überdeckungsbereich der Langlöcher 5 hindurch führt ein biegsames, drucksteifes Seil 6, das einerseits mit dem Innenprofil 2 verbunden ist und das sich andererseits an der Karosserie abstützt. Sind die Langlöcher 5 nur unwesentlich breiter als der Durchmesser des Seiles 6, so hat dies den Vorteil, daß durch Abstützung des Seiles 6 an den seitlichen Rändern der Langlöcher 5 eine Verdrehungssicherung des Wischerblattes 1 gegenüber dem Außenprofil 3 gegeben ist. Das Seil 6 könnte aber auch oberhalb des Außenprofils 3 an das Innenprofil 2 geführt und mit diesem verbunden sein. In diesem Fall erfolgt die Sicherung gegen Verdrehung des Wischers 1 andersartig. Das der Karosserie zugewandte Seilende ist in einem an der Karosserie angeordneten Führungsrohr 7 geführt. Dies hat den Vorteil, daß in dem Seil 6 eine axiale Kraftübertragung bei relativ geringem Seildurchmesser erfolgen kann, ohne daß sich dieses in dem ungeführten Bereich übermäßig durchbiegt. Das im Führungsrohr 7 geführte Seilende ist mit einem Nippel 8 versehen, der zwischen zwei Anschlägen im Führungsrohr 7 verschiebbar ist, die einerseits durch eine Stützschulter 9 in der Bohrung des Führungsrohres 7 und andererseits durch einen an der Stirnseite des Führungsrohres 7 angeordneten Deckel 10 gebildet sind. Zwischen der Stützschulter 9 und dem Nippel 8 ist eine Feder 11, die das Innenprofil 2 in Richtung Einfahrstellung belastet. Vorteilhaft ist bei dieser Ausführung, daß die im Inneren des Führungsrohres 7 angeordnete Stützschulter 9 und der durch den stirnseitigen Deckel 10 gebildete Anschlag vor Verunreinigung oder Beschädigung geschützt untergebracht sind. Vorteilhaft ist es ferner, wenn die Winkelstellung des Führungsrohres 7 der Stellung des Wischerarmes anpaßbar ist. Zu diesem Zweck ist das Führungsrohr 7 drehbar an der Karosserie angeordnet. Desweiteren ist eine Koppelstange 12 vorgesehen, die an einem Ende drehbar und begrenzt längsverschieblich mit dem Außenprofil 3 und an ihrem anderen Ende drehbar mit dem Führungsrohr 7 verbunden ist, mit Anlenkpunkten, die unterhalb der Verbindungsgeraden durch deren Schwenkachsen 13, 14 liegen.

Es ist auch möglich, die Koppelstange 12 an der Führungsrohrseite begrenzt längsverschieblich auszubilden und nicht am Außenprofil 3, oder die Anlenkpunkte oberhalb der Verbindungsgeraden durch die Schwenkpunkte 13, 14 des Außenprofils 3 und des Führungsrohres 7 anzuordnen. Auch ist es möglich eine Längsverschieblichkeit der Koppelstange 12 nicht vorzusehen Die Scheibenwischeranlage ist auch ohne Koppelstange 12 funktionsfähig, mit fest an der Karosserie angeordnetem Führungsrohr 7. An der Verbindung des Wischerblattes 1 mit dem Innenprofil 2 ist eine Feder 15 angebracht, die das Wischerblatt 1 in diejenige Endlage belastet, in der das Wischerblatt 1 zumindest annähernd in Längsrichtung des Wischerarmes ausgerichtet ist. Mit der im Außenprofil 3 geführten Seite der Steuerstange 16 ist ein in der Führungsbahn der Steuerstange 16 verschieblicher Nippel 17 verbunden, der durch Anfahren an einen Anschlag, der aus einer in der Führungsbahn der Steuerstange gebildeten Stützschulter 18 besteht, die Ausfahrbewegung der Steuerstange 16 begrenzt. Um den Stoß beim Anfahren des Nippels 17 auf die Stützschulter 18 zu mildern, ist zwischen dem Nippel 17 und der Stützschulter 18 eine an den Nippel 17 angrenzende Feder 19 vorgesehen, die zu der Stützschulter 18 einen Freiraum läßt. Sowohl die Steuerstange 16 wie auch das Innenprofil 2 umgibt je ein an der Stirnseite des Außenprofils angebrachter Abstreifring 20, 21, die die Führungsbahnen der Steuerstange 16 und des Innenprofils 2 vor Verunreinigungen schützen. Zusätzlich ist eine in der Zeichnung nicht dargestellte Abdeckung vorgesehen, die das Seil in dem Bereich von dem Langloch 5 im Außenprofil 3 bis zu dem Führungsrohr 9 abdeckt. Durch das gesteuerte Aus- und Einfahren des Wischerarmes und durch von der Schwenkbewegung des Wischerarmes abhängiges Drehen des Wischerblattes 1 kann trotz einfacher Gestaltung der Anlage in vorteilhafter Weise eine große Fläche der Frontscheibe freigewischt werden, wobei auch die oberen Eckbereiche der Frontscheibe erreichbar sind.

In Parkstellung des Wischerarmes liegt das Wischerblatt 1 etwa parallel zu der Unterseite des Frontscheiben-Fensterrahmens auf der Beifahrerseite. Die im Führungsrohr 7 befindliche Feder 11 belastet das Innenprofil 2 über das biegsame Seil 6 in die Einfahrstellung. Der am Außenprofil 3 angeordnete Schwenkzapfen 22 ist im Langloch 23 der Koppelstange 12 in die innere Endstellung geschoben. Wird das mit dem Antriebsmotor über Antriebsmittel verbundene Außenprofil 3 des Wischerarmes von der Parkstellung nach oben über die Frontscheibe bewegt, so entspannt sich die im Führungsrohr 7 befindliche Feder 11. Gleichzeitig bewegt sich der mit dem Außenprofil 3 verbundene Schwenkzapfen 22 in die äußere Endlage des in der Koppelstange 12 ausgebildeten Langloches 23. Wird der Wischerarm weiter nach oben geschwenkt, so wird das Führungsrohr 7 über die Koppelstange 12 mitbewegt. Die Anlenkpunkte 22, 24 sind so bestimmt, daß sich ein günstiger Nachführwinkel des Führungsrohres einstellt. Nachfolgend stößt der mit dem biegsamen Seil 6 verbundene Nippel 8 an den stirnseitigen Deckel 10 des Führungsrohres 7 an und schiebt anschließend durch Druckbelastung des Seiles 6 das mit dem Seil 6 verbundene Innenprofil 2 mit dem daran befestigten Wischer 1 aus dem Außenprofil 3 heraus. Ab einer von der Kontur der Frontscheibe abhängigen Ausfahrstellung des Innenprofils 2 liegt die zwischen der Stützschulter 18 und dem Nippel 17 angeordnete Feder 19 an der Stützschulter 18 an und verstellt bei einer gleichsinnig weiteren Bewegung des Wischerarmes kontinuierlich solange den Drehwinkel des Wischerblattes 1 in diejenige Endlage, die einen größeren Winkel zwischen Wischerblatt 1 und Wischerarm einschließt, bis die Feder 19 auf Blocklänge gedrückt ist. Das Innenprofil 2 kann nachfolgend nicht weiter aus dem Außenprofil 3 herausgeschoben werden. Eine weitere Vorwärtsbewegung des Wischerarmes erfolgt noch solange, bis das Wischerblatt 1 annähernd parallel zur Fensterrahmenseite verläuft, wobei sich das biegsame Seil 6 im ungeführten Bereich durch Änderung seiner Krümmung an die jeweiligen Geometrieverhältnisse anpaßt. Bei der Rückwärtsbewegung des Wischerarmes tritt der umgekehrte Vorgang ein. An Stelle des Seiles 6 kann selbstverständlich auch ein biegsamer, drucksteifer Stab verwendet werden.

**Patentansprüche**

1. Scheibenwischeranlage, insbesondere steuerbare Einarm-Scheibenwischeranlage für Kraftfahrzeuge, mit einem ein Wischerblatt (1) tragenden Wischarm, der aus einem von dem Antriebsmotor (4) über Antriebsmittel in eine Schwenkbewegung versetzbaren Außenprofil (3) und einem darin längsverschiebbaren Innenprofil (2) besteht, an dessen äußerem Ende das Wischerblatt (2) drehbar aufgenommen ist und mit einer im Außenprofil (3) in der Längsachse verschiebbaren, zur Verdrehung des Wischerblattes vorgesehenen Steuerstange (16), die an ihrem außenliegenden Ende, in seitlichem Abstand von der Längsachse des Innenprofils (2), gelenkig mit dem Wischerblatt (1) verbunden ist, dadurch gekennzeichnet, daß das Aus- und Einfahren des Wischerarmes durch ein biegsames, drucksteifes Seil (6) erfolgt, das einerseits mit dem Innenprofil (2) verbunden ist und das andererseits bereichsweise von einem an der Karosserie angeordneten Führungsrohr (7) umgeben ist und in diesem mit seinem Ende zwischen zwei Anschlägen verschiebbar ist.

2. Scheibenwischeranlage nach Anspruch 1, dadurch gekennzeichnet, daß das Führungsrohr (7) drehbar mit der Karosserie verbunden ist.

3. Scheibenwischeranlage nach Anspruch 1, dadurch gekennzeichnet, daß der eine Anschlag durch eine Stützschulter (9) in der Bohrung des Führungsrohres (7) gebildet ist, während der andere Anschlag ein an der Stirnseite des Führungsrohres (7) angeordneter Deckel (10) ist.

4. Scheibenwischeranlage nach Anspruch 3, dadurch gekennzeichnet, daß mit dem im Führungsrohr (7) geführten Ende des Seiles (6) ein Nippel (8) fest verbunden ist, der sich zwischen der Stützschulter (9) und dem Deckel (10) verschieben läßt.

5. Scheibenwischeranlage nach Anspruch 1, dadurch gekennzeichnet, daß ein elastisches Glied vorgesehen ist, das das Innenprofil (2) in Richtung Einfahrstellung belastet.

6. Scheibenwischeranlage nach Anspruch 3 und 5, dadurch gekennzeichnet, daß das elastische Glied eine Feder (11) ist, die sich zwischen dem Nippel (8) und der Stützschulter (9) befindet.

7. Scheibenwischeranlage nach Anspruch 1, dadurch gekennzeichnet, daß das Innenprofil (2) gegenüber dem Außenprofil (3) gegen Verdrehung gesichert ist.

8. Scheibenwischeranlage nach Anspruch 7, dadurch gekennzeichnet, daß die Verdrehungssicherung durch seitliche Abstützung des Seiles (6) an den Rändern von im Außen- (3) und Innenprofil (2) auf einer Seite angeordneten Langlöchern (5) bewirkt wird, die geringfügig breiter als der Durchmesser des Seiles (6) sind, die sich überdecken und durch die das Seil (6) an das Innenprofil (2) geführt ist.

9. Scheibenwischeranlage nach Anspruch 1, dadurch gekennzeichnet, daß zwei Anschläge vorgesehen sind, zwischen denen das Wischerblatt (1) gegenüber dem Innenprofil (2) schwenkbar ist.

10. Scheibenwischeranlage nach Anspruch 9, gekennzeichnet durch eine Feder (15), die an der Verbindung des Wischerblattes (1) mit dem Innenprofil (2) angebracht ist und die das Wischerblatt (1) in diejenige Endlage belastet, in der das Wischerblatt (1) zumindest annähernd in Längsrichtung des Wischerarmes ausgerichtet ist.

11. Scheibenwischeranlage nach Anspruch 1, dadurch gekennzeichnet, daß ein Anschlag vorgesehen ist, bis zu dem die Steuerstange (16) verschiebbar ist.

12. Scheibenwischeranlage nach Anspruch 11, gekennzeichnet durch einen Anschlag, der aus einer in der Führung der Steuerstange (16) gebildeten Stützschulter (18) besteht und mit einem an der Steuerstange (16) befestigten Nippel (17) zusammenwirkt.

13. Scheibenwischer nach Anspruch 12, dadurch gekennzeichnet, daß sich zwischen Nippel (17) und Stützschulter (18) eine Feder (19) befindet.

14. Scheibenwischeranlage nach Anspruch 1 und 2, dadurch gekennzeichnet, daß eine Koppelstange (12) vorgesehen ist, die an einem Ende drehbar mit dem Außenprofil (3) und an dem anderen Ende drehbar mit dem Führungsrohr (7) verbunden ist, mit Anlenkpunkten (22, 24), die entweder beide unterhalb oder beide oberhalb der Verbindungsgeraden durch die Schwenkachsen (13, 14) angeordnet sind.

15. Scheibenwischeranlage nach Anspruch 14, gekennzeichnet durch eine Koppelstange (12), die nicht nur drehbar sondern auch begrenzt längsverschieblich an dem Außenprofil (3) oder an dem Führungsrohr (7) angeordnet ist.

16. Scheibenwischeranlage nach Anspruch 1, dadurch gekennzeichnet, daß die Steuerstange (16) und das Innenprofil (2) je ein Abstreifring (20, 21) umgibt, der mit dem Außenprofil (3) des Wischerarmes verbunden ist.

17. Scheibenwischeranlage nach Anspruch 1 und 8, gekennzeichnet durch eine Abdeckung, die das Seil (6) in dem Bereich von dem Langloch (5) im Außenprofil (3) bis zu dem Führungsrohr (7) abdeckt.

**Claims**

1. A screen-wiper installation, especially a controllable single-arm screen-wiper installation for motor vehicles, having a wiper arm carrying a wiper blade (1) and comprising an outer profiled section (3) which can be set into a pivoting movement by the drive motor (4) through drive means and an inner profiled section (2) longitudinally displaceable therein, on the outer end of which outer profiled section the wiper blade (1) is rotatably mounted, and having a control rod (16) displaceable in the outer profiled

section (3) in the longitudinal axis and provided for turning the wiper blade, which control rod is articulatedly connected with the wiper blade (1) at its outwardly-lying end at a lateral distance from the longitudinal axis of the inner profiled section (2), characterised in that the extension and retraction movements of the wiper arm are effected by a flexible cable (6) rigid to thrust, which for the one part is connected with the inner profiled section (2) and for the other part is surrounded in one zone by a guide tube (7) arranged on the body and is displaceable with its end in this tube between two stops.

2. A screen-wiper installation according to Claim 1, characterised in that the guide tube (7) is rotatably connected with the body.

3. A screen-wiper installation according to Claim 1, characterised in that the one stop is formed by a support shoulder (9) in the bore of the guide tube (7), while the other stop is a cap (10) arranged on the end of the guide tube (7).

4. A screen-wiper installation according to Claim 3, characterised in that a nipple (8), which is displaceable between the support shoulder (9) and the cap (10), is firmly connected with the end of the cable (6) guided in the guide tube (7).

5. A screen-wiper installation according to Claim 1, characterised in that an elastic member is provided which loads the inner profiled section (2) in the direction of the retracted position.

6. A screen-wiper installation according to Claims 3 and 5, characterised in that the elastic member is a spring (11) which is situated between the nipple (8) and the support shoulder (9).

7. A screen-wiper installation according to Claim 1, characterised in that the inner profiled section (2) is secured against rotation in relation to the outer profiled section (3).

8. A screen-wiper installation according to Claim 7, characterised in that the securing against rotation is effected by lateral supporting of the cable (6) on the edges of slots (5) arranged on one side in the outer profiled section (3) and the inner profiled section (2), which slots are slightly wider than the diameter of the cable (6) and overlap and by which slots the cable (6) is guided on the inner profiled section (2).

9. A screen-wiper installation according to Claim 1, characterised in that two stops are provided between which the wiper blade (1) is pivotable in relation to the inner profiled section (2).

10. A screen-wiper installation according to Claim 9, characterised by a spring (15) which is fitted on the connection of the wiper blade (1) with the inner profiled section (2) and loads the wiper blade (1) into that end position in which the wiper blade (1) is oriented at least approximately in the longitudinal direction of the wiper arm.

11. A screen-wiper installation according to Claim 1, characterised in that a stop is provided as far as which the control rod (16) is displaceable.

12. A screen-wiper installation according to Claim 11, characterised by a stop which comprises a support shoulder (18) formed in the guide of the control rod (16) and cooperates with a nipple (17) secured to the control rod (16).

13. A screen-wiper according to Claim 12, characterised in that a spring (19) is situated between nipple (17) and support shoulder (18).

14. A screen-wiper installation according to Claims 1 and 2, characterised in that a coupling rod (12) is provided which is connected at one end rotatably with the outer profiled section (3) and at the other end rotatably with the guide tube (7), with articulation points (22, 24) which are arranged either both below or both above the straight lines of connection through the pivot axes (13, 14).

15. A screen-wiper installation according to Claim 14, characterised by a coupling rod (12) which is arranged not only rotatably but also limitedly longitudinally displaceably on the outer profiled section (3) or on the guide tube (7).

16. A screen-wiper installation according to Claim 1, characterised in that the control rod (16) and the inner profiled section (2) are surrounded each by a scraper ring (20, 21), which scraper rings are connected with the outer profiled section (3) of the wiper arm.

17. A screen-wiper installation according to Claims 1 and 8, characterised by a covering which covers the cable (6) in the region from the slot (5) in the outer profiled section (3) to the guide tube (7).

**Revendications**

1. Arrangement d'essuie-glace, notamment arrangement d'essuie-glace à bras unique gouvernable pour véhicules automobiles, avec un bras d'essuie-glace portant une lame d'essuie-glace (1) se composant d'un profilé extérieur (3) déplaçable en un mouvement de pivotement par le moteur d'entraînement (4) et des moyens d'entraînement, et d'un profilé intérieur (2) mobile longitudinalement à l'intérieur, à l'extrémité extérieure duquel la lame d'essuie-glace (1) est disposée tournante et avec une tige de commande (16) prévue mobile dans l'axe longitudinal dans le profilé extérieur (3) pour la rotation de la lame d'essuie-glace, tige de commande reliée de manière articulée à son extrémité extérieure à la lame d'essuie-glace, avec un écart latéral par rapport à l'axe longitudinal du profilé intérieur (2), caractérisé en ce que l'expansion et le retrait du bras d'essuie-glace s'effectue au moyen d'un câble (6) flexible, raide à la pression, relié d'une part au profilé intérieur (2) et entouré d'autre part par zones par un tube de guidage (7) disposé sur la carrosserie et mobile dans celui-ci à son extrémité, entre deux butées.

2. Arrangement d'essuie-glace selon la revendication 1, caractérisé en ce que le tube de guidage (7) est relié tournant à la carrosserie.

3. Arrangement d'essuie-glace selon la revendication 1, caractérisé en ce qu'une butée est formée par un épaulement d'appui (9) dans l'alésage du tube de guidage (7), tandis que l'autre butée est un couvercle (10) disposé sur le côté frontal du tube de guidage (7).

4. Arrangement d'essuie-glace selon la revendication 3, caractérisé en ce qu'un embout (8) est relié rigide à l'extrémité du câble (6) guidée dans le tube de guidage (7) et peut se déplacer entre l'épaulement d'appui (9) et le couvercle (10).

5. Arrangement d'essuie-glace selon la revendication 1, caractérisé en ce qu'il est prévu un organe élastique chargeant le profilé intérieur (2) en direction de la position de retrait.

6. Arrangement d'essuie-glace selon la revendication 3 et 5, caractérisé en ce que l'organe élastique est un ressort (11) se trouvant entre l'embout (8) et l'épaulement d'appui (9).

7. Arrangement d'essuie-glace selon la revendication 1, caractérisé en ce que le profilé intérieur (2) est fixé contre toute rotation, par rapport au profilé extérieur (3).

8. Arrangement d'essuie-glace selon la revendication 7 caractérisé en ce que la sécurité de rotation est provoquée par un appui latéral du câble (6) sur les bords de trous oblongs (5) disposés sur un côté, sur les bords des profilés extérieur (3) et intérieur (2), trous légèrement plus grand que le diamètre du câble (6), se recouvrant et a travers lesquels le câble (6) est passé dans le profilé intérieur (2).

9. Arrangement d'essuie-glace selon la revendication 1, caractérisé en ce que deux butées sont prévues, entre lesquelles la lame d'essuie-glace (1) est pivotante par rapport au profilé intérieur (2).

10. Arrangement d'essuie-glace selon la revendication 9, caractérisé par un ressort (15) monté sur la liaison de la lame d'essuie-glace (1) au profilé intérieur (2) et chargeant la lame d'essuie-glace (1) en une position finale dans laquelle la lame d'essuie-glace (1) est orientée approximativement en direction longitudinale du bras d'essuie-glace.

11. Arrangement d'essuie-glace selon la revendication 1, caractérisé en ce qu'il est prévu une butée jusqu'à laquelle la tige de commande (16) est mobile.

12. Arrangement d'essuie-glace selon la revendication 11, caractérisé par une butée se composant de l'épaulement d'appui (18) formé dans le guidage de la tige de commande (16) et coopérant avec un embout (17) fixé sur la tige de commande (16).

13. Arrangement d'essuie-glace selon la revendication 12, caractérisé en ce qu'un ressort (19) se trouve entre embout (17) et épaulement d'appui (18).

14. Arrangement d'essuie-glace selon la revendication 1 et 2, caractérisé en ce qu'il est prévu une tige de couplage (12) reliée tournante à une extrémité au profilé extérieur (3) et reliée tournante à l'autre extrémité au tube de guidage (7), avec des points d'articulation (22, 24), tous les deux disposés, soit au-dessous, soit au-dessus de la droite de liaison passant par les axes de pivotement (13, 14).

15. Arrangement d'essuie-glace selon la revendication 14, caractérisé par une tige de couplage (12) qui est disposée sur le profilé extérieur (3) ou sur le tube de guidage (7), non seulement tournante, mais également mobile longitudinalement de manière limitée.

16. Arrangement d'essuie-glace selon la revendication 1, caractérisé en ce que la tige de couplage (16) et le profilé intérieur (2) entourent chacun un anneau racleur (20, 21) relié au profilé extérieur (3) du bras d'essuie-glace.

17. Arrangement d'essuie-glace selon la revendication 1 et 8, caractérisé par un recouvrement recouvrant le câble (6) dans la zone du trou oblong (5), dans le profilé extérieur (3), jusque sur le tube de guidage (7).

1